# FASCICULE DE BREVET EUROPEEN

(11) **EP 2 904 613 B1**
(45) Date de publication et mention de la délivrance du brevet: **24.08.2016**
(21) Numéro de dépôt: 13771133.9
(22) Date de dépôt: 30.09.2013
(51) Int. Cl.: G21F 5/08

(54) **EMBALLAGE POUR LE TRANSPORT ET/OU L'ENTREPOSAGE DE MATIERES RADIOACTIVES, COMPRENANT DES MOYENS AMELIORES DE FIXATION D'UN CAPOT AMORTISSEUR DE CHOCS**
VERPACKUNG FÜR DEN TRANSPORT UND/ODER DIE LAGERUNG VON RADIOAKTIVEN MATERIALIEN MIT VERBESSERTER VORRICHTUNG ZUM BEFESTIGEN EINER STOSSDÄMPFENDEN ABDECKUNG
PACKAGING FOR TRANSPORTING AND/OR STORING RADIOACTIVE MATERIALS, INCLUDING IMPROVED MEANS FOR ATTACHING A SHOCK-ABSORBING COVER

(30) Priorité: 02.10.2012 FR 1259336
(43) Date de publication de la demande: 12.08.2015
(73) Titulaire: TN International, 78182 Montigny Le Bretonneux (FR)
(72) Inventeur: ALLAN, Eric, F-78430 Louveciennes (FR); ZAHRI, Nasser, F-59100 Roubaix (FR); MAUVAIS, Cédric, F-78000 Versailles (FR)
(74) Mandataire: Brevalex
(86) Numéro de dépôt international: PCT/EP2013/070323
(87) Numéro de publication internationale: WO 2014/053433

(56) Documents cités:
- EP-A- 0 054 944
- EP-A1- 1 571 677
- DE-A1- 1 955 113
- FR-A1- 2 846 778

## Description

### DOMAINE TECHNIQUE

La présente invention se rapporte au domaine des emballages pour le transport et/ou l'entreposage de matières radioactives, de préférence pour combustibles irradiés comme des assemblages de combustible nucléaire irradiés, ou encore pour des déchets vitrifiés.

### ETAT DE LA TECHNIQUE ANTERIEURE

Classiquement, pour assurer le transport et/ou l'entreposage de matières radioactives, il est utilisé des dispositifs de rangement, également appelés « paniers » ou « râteliers » de rangement. Ces dispositifs de rangement, habituellement de forme cylindrique et de section sensiblement circulaire ou polygonale, sont aptes à recevoir les matières radioactives. Le dispositif de rangement est destiné à être logé dans la cavité d'un emballage afin de former conjointement avec celui-ci un conteneur pour le transport et/ou l'entreposage de matières radioactives, dans lequel elles sont parfaitement confinées.

La cavité précitée est généralement définie par un corps d'emballage comportant un corps latéral s'étendant selon un axe longitudinal de l'emballage, ainsi qu'un fond et un couvercle d'emballage agencés aux extrémités opposées du corps, selon la direction de l'axe longitudinal. Le corps latéral comprend une ou plusieurs viroles métalliques concentriques équipées de moyens de conduction thermique et de moyens de protection radiologique. Ces derniers sont prévus pour former une barrière contre les neutrons émis par la matière radioactive logée dans la cavité, tandis que les moyens de conduction thermique permettent de conduire la chaleur dégagée par les matières radioactives vers l'extérieur du conteneur, afin d'éviter tout risque de surchauffe susceptible de provoquer une dégradation de ces matières, une altération des propriétés mécaniques des matériaux constitutifs des éléments structurels de l'emballage ou de leur liaison (soudures, vis), ou encore une élévation de pression anormale dans la cavité.

L'emballage comporte également, fixés aux extrémités opposées du corps d'emballage, des capots amortisseurs de chocs ayant en particulier pour fonction de protéger le couvercle et le fond de l'emballage, de manière à conserver le confinement de la matière radioactive dans la cavité, même en cas de chute.

Pour assurer le montage des capots amortisseurs sur le corps d'emballage, il est généralement prévu des éléments vissés comme des vis de fixation traversant chacune le trou de passage d'une portion de fixation intégrée au capot et en contact direct avec le corps de l'emballage, chaque vis étant vissée dans un orifice correspondant du corps d'emballage, en étant agencée parallèlement à la direction longitudinale de celui-ci.

Lors d'une épreuve de chute libre représentant des conditions accidentelles de transport, les capots amortisseurs de l'emballage peuvent se déformer et/ou se déplacer dans le plan transversal. Bien que les vis soient habituellement protégées des chocs, il existe néanmoins un risque de rupture par cisaillement d'une ou plusieurs des vis de fixation, avec pour éventuelle conséquence l'éjection du capot amortisseur de chocs. Ce risque est extrêmement problématique car en cas d'éjection du capot, l'emballage peut rencontrer de grandes difficultés à satisfaire les autres exigences réglementaires, comme la chute sur poinçon qui pourrait entraîner une perte d'étanchéité du couvercle, ou encore l'épreuve de feu qui, pour être satisfaite, nécessite normalement la présence des capots amortisseurs équipés de moyens anti-feu.

Pour résoudre ce problème, il a été envisagé d'augmenter le jeu entre chaque vis de fixation et son trou de passage, de manière à ce que la déformation du capot en cas de chute comble ce jeu, sans cisailler la vis.

Néanmoins, cette solution présente plusieurs inconvénients. Le premier réside dans la déformation / le déplacement complexe du capot, et donc dans la difficulté de la/le modéliser. Par conséquent, il s'avère difficile de dimensionner le jeu de manière à s'assurer que la vis de fixation ne soit pas cisaillée en cas de chute de l'emballage sur le capot.

De plus, le jeu ainsi dimensionné est souvent très élevé, avec pour conséquence le fait que la tête de vis présente un diamètre plus faible que celui du trou de passage. Il devient alors nécessaire d'utiliser une rondelle d'appui très fortement sollicitée en flexion, dans un assemblage qui ne respecte plus les normes conventionnelles de serrage de vis.

Des solutions visant à augmenter le diamètre des têtes de vis, ou encore à multiplier le nombre de vis pour limiter les risques d'éjection des capots sont envisageables, mais elles impactent directement la masse globale de l'emballage et peuvent se heurter par ailleurs à des problèmes d'encombrement.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un emballage pour le transport et/ou l'entreposage de matières radioactives, comprenant un corps d'emballage s'étendant selon une direction longitudinale, et comportant en outre au moins un capot amortisseur de chocs monté respectivement sur l'une des deux extrémités longitudinalement opposées du corps d'emballage, ledit capot amortisseur comprenant des portions de fixation sur ledit corps d'emballage, chaque portion de fixation définissant un trou de passage traversé par un élément vissé dans ledit corps d'emballage.

Selon l'invention, au moins l'une desdites portions de fixation présente une zone déformable qui, en cas de sollicitation extérieure sur le capot amortisseur conduisant à un effort de contact entre ledit élément vissé et le trou de passage, est conçue pour se déformer plastiquement.

En prévoyant une telle zone dont la déformation plastique est prioritaire par rapport au cisaillement de la vis, l'invention est remarquable en ce qu'elle offre une solution limitant considérablement les risques d'éjection des capots amortisseurs en cas de chute de l'emballage, sans pour autant nécessiter de surdimensionner le diamètre des trous de passage. Des assemblages conformes aux normes conventionnelles de serrage peuvent donc être pratiqués.

L'invention apporte ainsi une réponse originale et satisfaisante au problème de risque d'éjection des capots amortisseurs, en cas de chute de l'emballage provoquant une sollicitation extérieure sur l'un des capots amortisseurs, dont au moins une composante se situe dans un plan transversal de cet emballage. En effet, si cette composante transversale engendre une déformation et/ou un déplacement du capot qui conduit à un appui de la surface intérieure du trou de passage sur l'élément vissé, alors la zone déformable est prévue pour se déformer plastiquement suite à cet appui, l'élément vissé résistant quant à lui à la rupture par cisaillement durant cette déformation plastique, au moins sur une certaine gamme d'intensité d'effort de contact.

De préférence, la vis résiste à la rupture par cisaillement au moins jusqu'à une valeur d'intensité d'effort de contact correspondant à celle maximale rencontrée au cours des épreuves de chutes réglementaires, en particulier la chute libre de neuf mètres. A cet égard, il est noté que c'est essentiellement la zone déformable qui est conçue pour engendrer, durant sa déformation plastique, une intensité d'effort de contact acceptable pour éviter le cisaillement de la vis.

De préférence, ce sont chacune des portions de fixation qui sont équipées de la solution propre à l'invention. Cela permet de bénéficier des avantages cités ci-dessus, quelle que soit la zone d'impact du capot amortisseur. De plus, étant donné que la déformation du capot peut se propager très au-delà de la zone d'impact, les éléments vissés situés à distance de cette zone sont également protégés d'une éventuelle rupture par cisaillement. Ce cas de figure se rencontre notamment lorsque les portions de fixation se trouvent agencées sur un anneau, qui, en cas de choc, est susceptible de se déformer de manière ovale, et donc de solliciter les éléments vissés situés à distance du choc, jusqu'à ceux agencés diamétralement opposés à la zone d'impact.

A titre indicatif, la composante dans le plan transversal conduisant à l'appui du trou de passage sur l'élément vissé, après déformation/déplacement du capot, peut être radiale, en particulier lorsque le capot présente une surface extérieure de révolution centrée sur l'axe longitudinal de l'emballage. Par « radiale », il est ici entendu la direction dans le plan transversal définie entre l'axe longitudinal de l'emballage et l'axe de l'élément vissé, orienté longitudinalement. Naturellement, en fonction de la forme du capot et de la nature de l'impact, la composante de ladite sollicitation extérieure dans le plan transversal peut adopter toute autre direction.

De préférence, ladite zone déformable s'étend sur un secteur angulaire autour de l'élément vissé, au moins une partie de ce secteur angulaire étant orientée vers l'extérieur du capot. En orientant la zone déformable de la sorte, celle-ci est capable de répondre au mieux en cas de sollicitations extérieures appliquées au capot. A cet égard, le secteur angulaire est de préférence centré sur la direction radiale passant par l'axe longitudinal et l'axe de l'élément vissé. De plus, le secteur peut s'étendre sur tout angle jugé approprié, jusqu'à 360°. Enfin, il est noté que la zone déformable n'a pas nécessairement une forme circulaire, une rainure droite en dessous d'un ligament de matière pouvant par exemple être retenu, les deux extrémités de la rainure définissant dans ce cas l'étendue du secteur angulaire.

De préférence, ladite zone déformable présente plusieurs éléments espacés angulairement les uns des autres sur ledit secteur angulaire. Aussi, les trouées entre les éléments espacés forment des vides dans lesquels les zones déformables peuvent se déformer plastiquement.

Selon un mode de réalisation préféré de l'invention, ladite zone déformable s'étend, selon la direction de l'élément vissé, sur une épaisseur inférieure à la hauteur dudit trou de passage.

Ladite zone déformable prend alors la forme d'un ligament de matière situé au droit d'une rainure, ou d'une gorge lorsque le ligament s'étend sur 360°.

Dans ce cas de figure, ladite rainure ou gorge s'ouvre sur une même surface que celle sur laquelle débouche ledit trou de passage. Ici aussi, la rainure/gorge forme un vide dans lequel la zone déformable peut se déformer plastiquement.

Ledit ligament de matière est préférentiellement annulaire et porte intérieurement une chemise définissant ledit trou de passage, le raccordement entre le ligament et la chemise pouvant s'effectuer à l'une des deux extrémités opposées de celle-ci, ou entre ces deux extrémités.

Selon un autre mode de réalisation préféré, ladite zone déformable est une partie en saillie radialement vers l'intérieur en direction de l'élément vissé, ladite partie en saillie définissant partiellement ledit trou de passage. Ici, le trou de passage est de préférence défini par au moins deux parties séparées par un épaulement selon la direction longitudinale, parmi lesquelles ladite partie en saillie.

Selon encore un autre mode de réalisation préféré, ladite portion de fixation comprend une rainure ou gorge débouchant sur l'une des deux surfaces opposées de la portion de fixation, ainsi qu'un évidement débouchant sur l'autre des deux surfaces, la rainure/gorge et l'évidement définissant entre eux un ligament de matière reliant une partie faisant saillie radialement vers l'intérieur en direction de l'élément vissé et définissant partiellement ledit trou de passage, à une partie extérieure de la portion de fixation, ladite zone de déformation étant formée par ledit ligament de matière. Ici, la rainure/gorge et l'évidement forment des vides dans lesquels le ligament peut se déformer plastiquement.

Quel que soit le mode de réalisation envisagé, l'élément vissé présente de préférence une tête d'appui de diamètre supérieur à celui du trou de passage. Cela permet d'effectuer un assemblage conforme aux normes conventionnelles de serrage. Pour les mêmes raisons, la zone déformable est de préférence conçue pour ne pas se déformer plastiquement lors du serrage de l'élément vissé.

Ladite portion de fixation fait de préférence partie intégrante d'un fond du capot amortisseur. Elle peut être ou non réalisée d'une seule pièce avec une plaque de fond de ce capot. Eventuellement, toutes les portions de fixation sont agencées sur un même anneau centré sur l'axe longitudinal de l'emballage. Les portions de fixation peuvent alors faire partie intégrante de l'anneau, en étant obtenues par usinage de cet anneau. Alternativement, les portions de fixation peuvent faire l'objet d'éléments indépendants fixés à l'anneau, par exemple par vissage ou soudage. Dans ce dernier cas, les portions de fixation peuvent être réalisées dans un matériau différent de celui de l'anneau, par exemple en aluminium ou l'un de ses alliages.

Alternativement, la portion de fixation se situe sur une bride latérale du capot amortisseur, la bride faisant saillie radialement vers l'intérieur ou l'extérieur.

Enfin, il est noté que ledit corps d'emballage comporte un couvercle, un fond écarté du couvercle selon ladite direction longitudinale, ainsi qu'un corps latéral d'emballage reliant le fond et le couvercle, les éléments vissés pouvant être assemblés sur l'un quelconque de ces trois éléments du corps d'emballage.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un emballage pour le transport et/ou l'entreposage d'assemblages de combustible nucléaire irradiés, selon un mode de réalisation préféré de l'invention ;
- la figure 2 représente une vue en coupe transversale prise selon le plan P de la figure 1 ;
- la figure 3 représente une vue agrandie en coupe longitudinale d'une partie du capot amortisseur de chocs équipant l'emballage montré sur la figure 1 ;
- la figure 4 montre une vue en perspective d'une partie du fond du capot amortisseur montré sur la figure 3 ;
- la figure 5 représente une vue en perspective agrandie du fond montré sur la figure précédente, intégrant une portion de fixation coopérant avec une vis de fixation ;
- la figure 6 représente une vue en coupe prise selon le plan P' de la figure 5 ;
- la figure 6a représente une vue analogue à celle de la figure 6, selon une alternative de réalisation ;
- la figure 7 représente une vue partielle en perspective de l'emballage en condition de chute sur son capot amortisseur supérieur ;
- la figure 8 est une vue similaire à celle de la figure 6, l'assemblage se présentant dans une configuration déformée obtenue suite à la chute schématisée sur la figure 7 ;
- la figure 9 représente une vue similaire à la figure 5, selon une autre alternative de réalisation ;
- la figure 9a est une vue de dessus de la portion de fixation montrée sur la figure 9, l'assemblage se présentant dans une configuration déformée obtenue suite à la chute schématisée sur la figure 7 ;
- la figure 10 représente une vue similaire à celle de la figure 5, selon encore une autre alternative de réalisation ;
- les figures 11 et 12 représentent des vues respectivement similaires à celles des figures 6 et 8, avec les portions de fixation se présentant selon un autre mode de réalisation préféré de l'invention ; et
- les figures 13 et 14 représentent des vues respectivement similaires à celles des figures 6 et 8, avec les portions de fixation se présentant selon encore un autre mode de réalisation préféré de l'invention.

### EXPOSÉ DÉTAILLÉ DE MODES DE RÉALISATION PRÉFÉRÉS

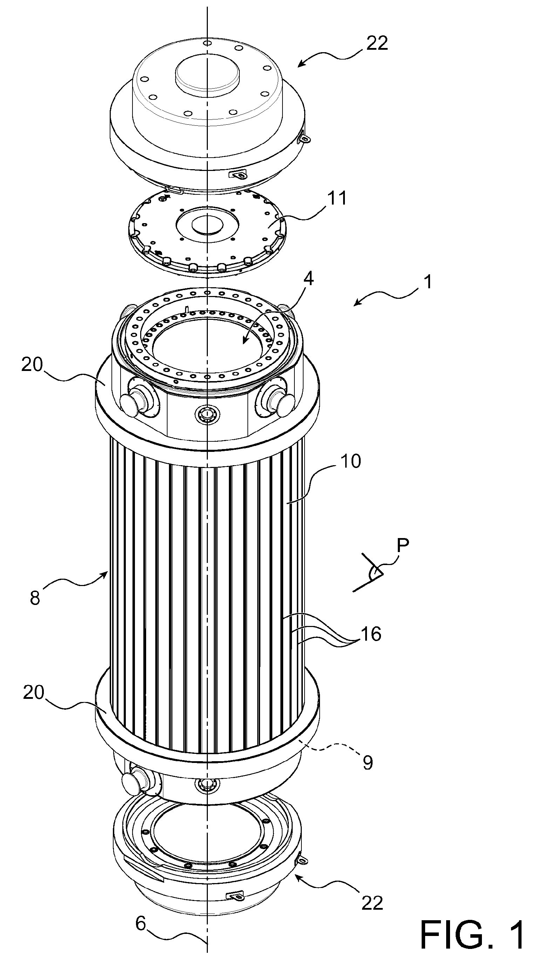

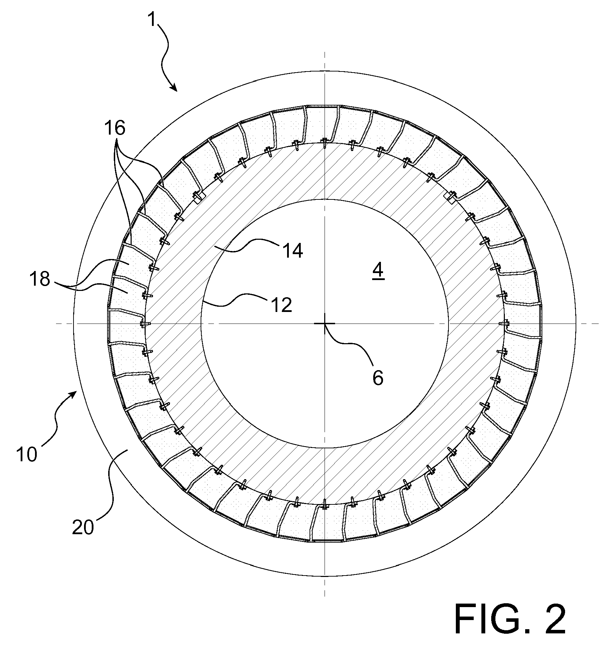

Tout d'abord en référence aux figures 1 et 2, il est représenté un emballage pour le transport et/ou l'entreposage d'assemblages de combustible nucléaire irradiés.

L'emballage 2 objet de la présente invention définit une cavité de logement 4 à l'intérieur de laquelle se trouve un dispositif de rangement (non représenté) également dénommé panier de rangement, destiné à recevoir les assemblages de combustible. L'ensemble forme un conteneur pour le transport et/ou l'entreposage d'assemblages de combustible nucléaire irradiés.

L'emballage 1 présente un axe longitudinal 6. Dans toute la description, le terme « longitudinal » doit être compris comme parallèle à l'axe longitudinal 6 et à la direction longitudinale de l'emballage. Egalement, le terme « transversal » doit être compris comme orthogonal à l'axe 6.

L'emballage 2 dispose d'un corps d'emballage 8 définissant la cavité 4, et pourvu d'un fond 9 sur lequel le dispositif de rangement est destiné à reposer en position verticale, d'un couvercle 11 agencé à l'extrémité longitudinale opposée de l'emballage, et d'un corps latéral 10 s'étendant autour et selon l'axe longitudinal 6, c'est-à-dire selon la direction longitudinale de l'emballage. Le fond et le couvercle sont ainsi agencés aux extrémités longitudinales du corps latéral 10.

Le fond 9 peut être réalisé d'une seule pièce avec une partie du corps latéral 10, tandis que le couvercle 11 est, par nature, amovible, de manière à pouvoir libérer/obturer une ouverture du corps latéral 10 à travers laquelle le panier est destiné à être introduit/extrait.

C'est donc le corps latéral 10 qui définit la cavité de logement 4, à l'aide d'une surface intérieure latérale 12 de forme sensiblement cylindrique et de section circulaire, et d'axe confondu avec l'axe 6.

Dans ce mode de réalisation préféré, le corps latéral 10 présente tout d'abord une paroi / virole métallique 14 centrée sur l'axe longitudinal 6. Extérieurement, la virole 14 porte des moyens de conduction thermique 16 en forme d'ailettes, ainsi que des moyens de protection neutronique 18 conçus pour former une barrière contre les neutrons émis par les assemblages de combustible logés dans le dispositif de rangement.

A proximité des extrémités longitudinales du corps d'emballage, ce dernier est équipé d'anneaux 20 de protection contre les chocs, centrés sur l'axe 6.

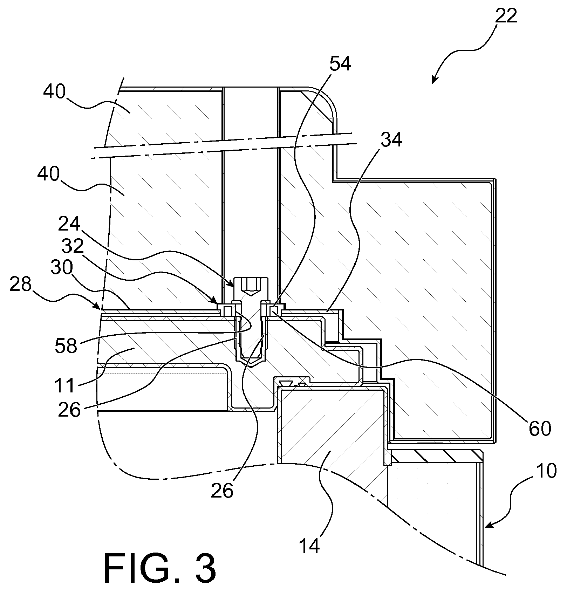

En outre, l'emballage 1 comporte, respectivement montés sur ses deux extrémités longitudinales opposées, deux capots amortisseurs de chocs 22, fixés au corps d'emballage 8 à l'aide de vis de fixation 24 orientées longitudinalement, et agencées à proximité de la périphérie de chaque capot. La figure 3 montre une partie du capot supérieur 22 recouvrant le couvercle. Ici, les vis 24, par exemple compris dans un nombre entre 4 et 12 et réparties circonférentiellement, sont vissées directement dans des orifices filetés 26 du couvercle 11. Alternativement, ces vis pourraient être fixées sur la virole 14 du corps latéral 10, sans sortir du cadre de l'invention.

En référence à présent aux figures 3 à 6, il va être décrit plus précisément les moyens mis en oeuvre pour fixer le capot 22 sur le couvercle 11. A cet égard, il est noté que la description qui va suivre concerne la fixation du capot supérieur sur le couvercle, mais que le même principe s'applique pour la fixation du capot inférieur sur le fond ou le corps latéral.

Dans le mode de réalisation préféré qui a été représenté sur les figures 3 à 6, la fixation du capot 22 s'effectue par son fond 28, situé en regard de la surface supérieure du couvercle. Le fond peut être réalisé d'une seule pièce, ou bien obtenu à l'aide de plusieurs éléments assemblés les uns aux autres. C'est ce dernier cas qui a été représenté sur les figures, avec le fond 28 présentant une plaque centrale en forme de disque 30 centré sur l'axe 6, un anneau de fixation 32 agencé autour du disque, ainsi qu'un autre anneau périphérique 34 agencé autour de l'anneau de fixation 32. Ces éléments 30, 32, 34 sont préférentiellement soudés les uns aux autres pour former le fond en regard de la surface supérieure du couvercle 11.

Comme cela est visible sur la figure 3, le fond 28 supporte une couche d'absorption de chocs 40, par exemple en bois.

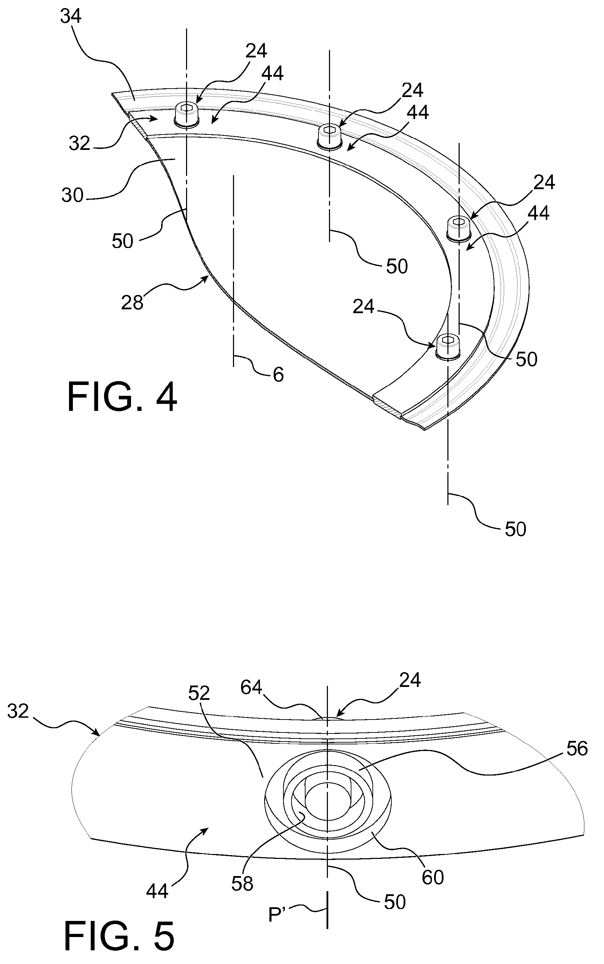

L'anneau 32, de préférence réalisé en acier, est équipé d'une pluralité de portions de fixation 44 se succédant selon la direction circonférentielle. Ces portions 44, montrées sur les figures 4 à 6, sont donc chacune constituée par un secteur angulaire de l'anneau 32, centré sur l'axe 50 de la vis 24 associée à chaque portion de fixation 44.

Chaque portion 44 comprend une partie extérieure 52 s'étendant autour de l'axe 50 sur toute l'épaisseur de l'anneau 32, et définissant en son centre un alésage portant un ligament de matière 54 annulaire, centré sur l'axe 50. Ici, le ligament 54 est situé à l'extrémité haute de l'alésage, sa surface supérieure étant agencée dans la continuité de la surface supérieure de l'anneau 32. Le ligament 54, faisant saillie radialement vers l'intérieur à partir de l'alésage, ne s'étend que sur une partie de l'épaisseur de l'anneau, le rapport d'épaisseur étant préférentiellement compris entre 5 et 35.

Le ligament 54 porte intérieurement une chemise 56 centrée sur l'axe 50 et définissant intérieurement le trou de passage 58 de la vis 24. Le ligament 54 est aussi situé à l'extrémité haute de la chemise, sa surface supérieure étant donc agencée dans la continuité de la surface supérieure de cette chemise 56, qui s'étend sur une épaisseur identique à celle de l'anneau 32.

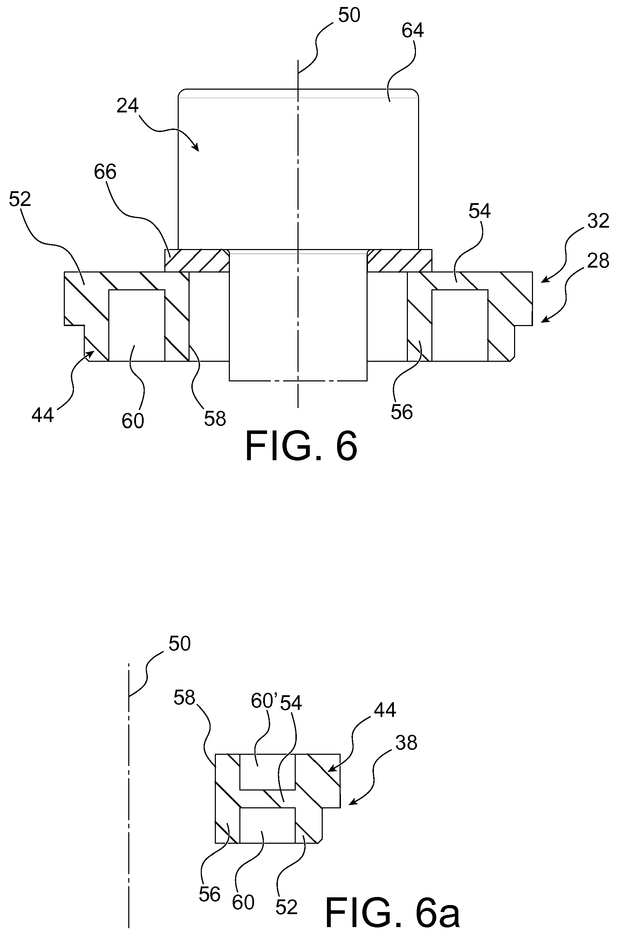

Ainsi, le ligament 54 se trouve agencé au droit d'une gorge 60, formée sous le ligament entre ledit alésage et la surface extérieure de la chemise 56. La gorge 60 centrée sur l'axe 50 débouche vers le bas sur la même surface que celle sur laquelle débouche le trou de passage 58, cette gorge pouvant être obtenue par simple usinage annulaire sur la surface inférieure de l'anneau 32. Alternativement, sur la figure 6a, il a été représenté une autre configuration dans laquelle le ligament 54 est agencé centré dans l'alésage selon la direction de l'épaisseur de l'anneau 32, le ligament portant donc la chemise 56 en son milieu. Dans ce cas de figure, des gorges inférieure 60 et supérieure 60' se trouvent de part et d'autre de ce ligament 54.

De retour à la réalisation de la figure 6, le trou de passage 58 est traversé par la vis 24 dont la tête d'appui 64 présente un diamètre supérieur à celui de ce trou 58, une rondelle 66 pouvant être interposée entre ces deux éléments. Aussi, le serrage de la vis 24 peut s'effectuer selon les règles de l'art, sans trop solliciter la rondelle en flexion.

L'une des particularités de la présente invention réside dans le fait que le ligament de matière 54 forme une zone déformable de la portion 44. Cette zone 54 est conçue pour qu'en cas de sollicitation extérieure survenant sur le capot amortisseur 22, par exemple en cas d'épreuve de chute libre réglementaire conduisant à un effort de contact entre la vis 24 et la surface intérieure du trou de passage 58, cette zone 54 se déforme plastiquement pendant que la vis 24 résiste à la rupture par cisaillement.

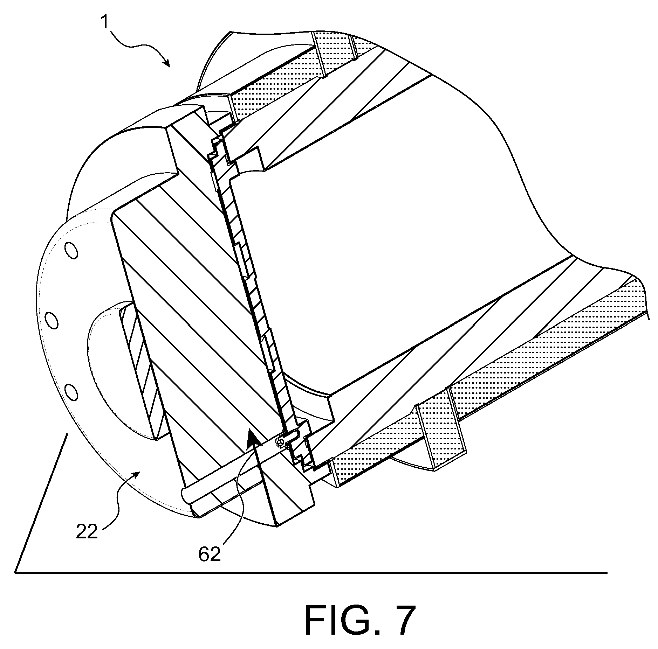

Par conséquent, en cas de chute de l'emballage sur le capot 22 comme cela a été schématisé sur la figure 7, provoquant une sollicitation extérieure sur le capot avec au moins une composante transversale représentée par la flèche 62, le capot 22 a tendance à se déformer et/ou se déplacer transversalement, avec pour éventuelle conséquence si la sollicitation est suffisamment élevée, une mise en contact puis un effort de contact entre la surface intérieure du trou de passage 58 et la tige de la vis 24.

La conception est prévue pour que dans de telles conditions, la déformation plastique de la zone déformable formée par le ligament 54 soit prioritaire sur le cisaillement de la vis 24. Par conséquent, durant le choc, le ligament 54 s'écrase en se déformant plastiquement sous l'effet de l'effort de contact appliqué par la vis 24 et transitant par la chemise 56. De préférence, grâce à la déformation plastique de la zone 54, la vis 24 peut résister à la rupture par cisaillement au moins jusqu'à une valeur d'intensité d'effort de contact correspondant à celle maximale rencontrée au cours des épreuves de chutes réglementaires, en particulier la chute libre de neuf mètres.

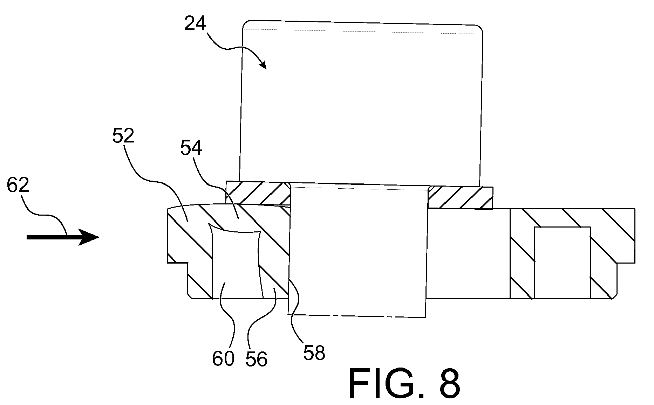

La déformation par écrasement du ligament 54 est ici autorisée par l'expansion longitudinale de ce ligament vers le haut, mais principalement par son expansion vers le bas, dans la gorge 60 comme cela a été schématisé sur la figure 8. Pour le cas de la figure 6a, cette expansion longitudinale s'effectue vers le haut et vers le bas dans les deux gorges 60, 60'.

Il est précisé que la zone déformable est néanmoins suffisamment rigide pour ne pas se déformer en conditions normales d'exploitation du conteneur, notamment lors des opérations de transport ou de manutention.

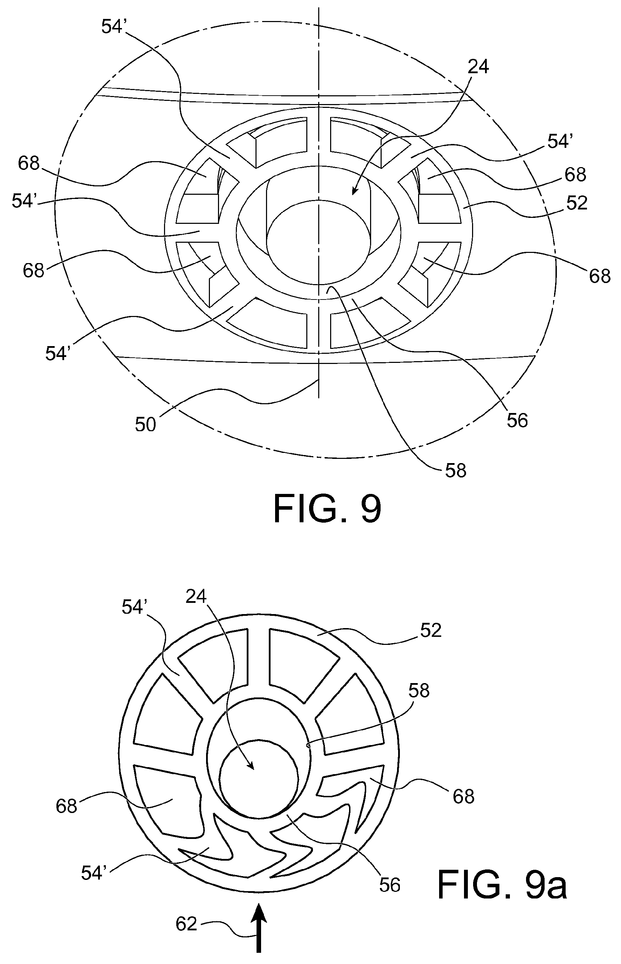

### Dans l'alternative montrée sur la figure 9,

la jonction entre la portion extérieure 52 et la chemise 56 est trouée à espaces réguliers répartis angulairement, laissant apparaître une pluralité d'éléments 54' en forme de branche reliant la partie extérieure 52 à la chemise 56, ces branches s'étendant préférentiellement sur toute la hauteur de la chemise 56. Ces branches 54' sont donc espacées angulairement les unes des autres par des vides 68, qui s'étendent transversalement et dans lesquels les branches 54' se déforment plastiquement en cas de chute, comme cela est visible sur la figure 9a.

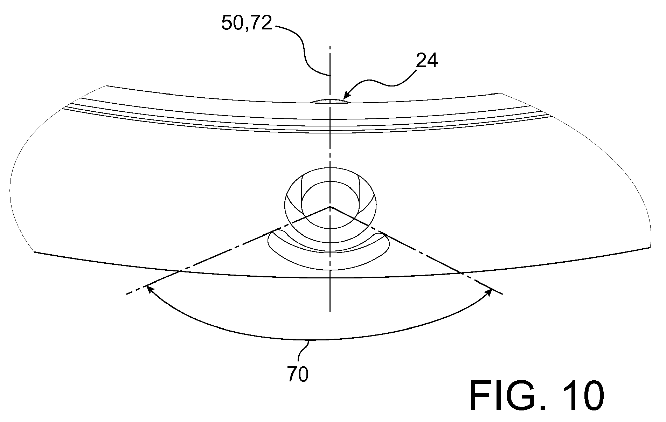

La figure 10 montre une alternative de réalisation dans laquelle la zone déformable ne s'étend pas sur un secteur angulaire de 360°, mais sur une valeur inférieure. Ici, le secteur angulaire restreint 70, par exemple compris entre 90 et 180°, est orienté vers l'extérieur de l'emballage en étant de préférence centré sur la direction radiale 72 passant par l'axe longitudinal de l'emballage et l'axe 50 de la vis 24. Ce positionnement permet à la zone déformable de répondre au mieux en cas de sollicitation extérieure ayant sa composante transversale orientée selon ladite direction radiale 72.

Il est indiqué que sur ce secteur angulaire restreint, la zone déformable peut être continue comme sur la figure 6, ou trouée comme sur la figure 9.

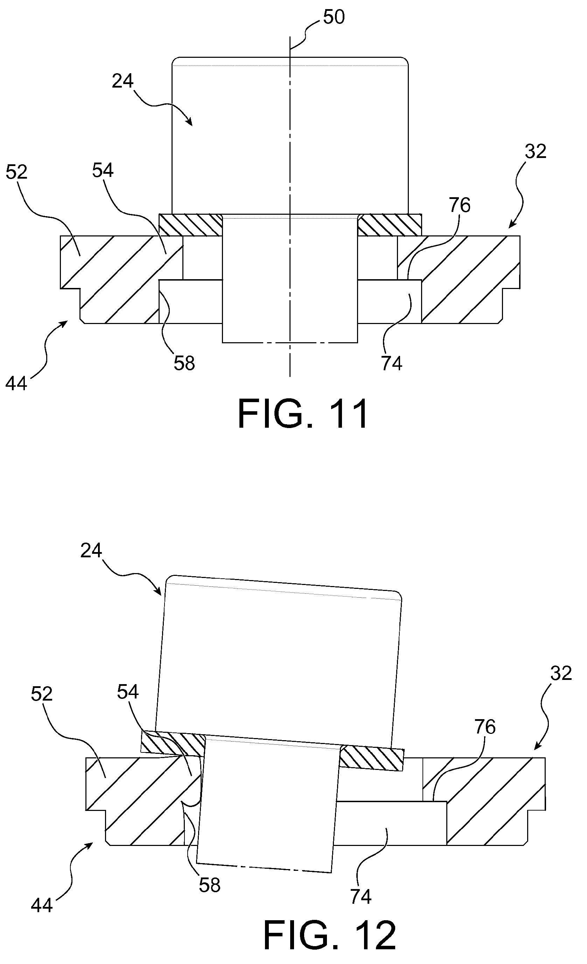

En référence à présent aux figures 11 et 12, il est montré un autre mode de réalisation préféré dans lequel la zone déformable 54 prend toujours la forme d'une partie annulaire en saillie radialement vers l'intérieur en direction de la vis 24 à partir de l'alésage, mais qui présente une surface intérieure définissant partiellement le trou de passage 58. Un évidement de matière 74 centré sur l'axe 50 débouche sur la surface inférieure de l'anneau 32, et présente un diamètre supérieur à celui de la surface intérieure de la partie déformable 54. Par conséquent, le trou de passage 58 est ici formé par deux parties séparées selon la direction longitudinale par un épaulement 76. Ces deux parties sont la partie en saillie 54 et la partie résultant de l'évidement 74, dans lequel la partie 54 peut se déformer plastiquement en s'expansant longitudinalement en cas de chute, comme cela a été schématisé sur la figure 12.

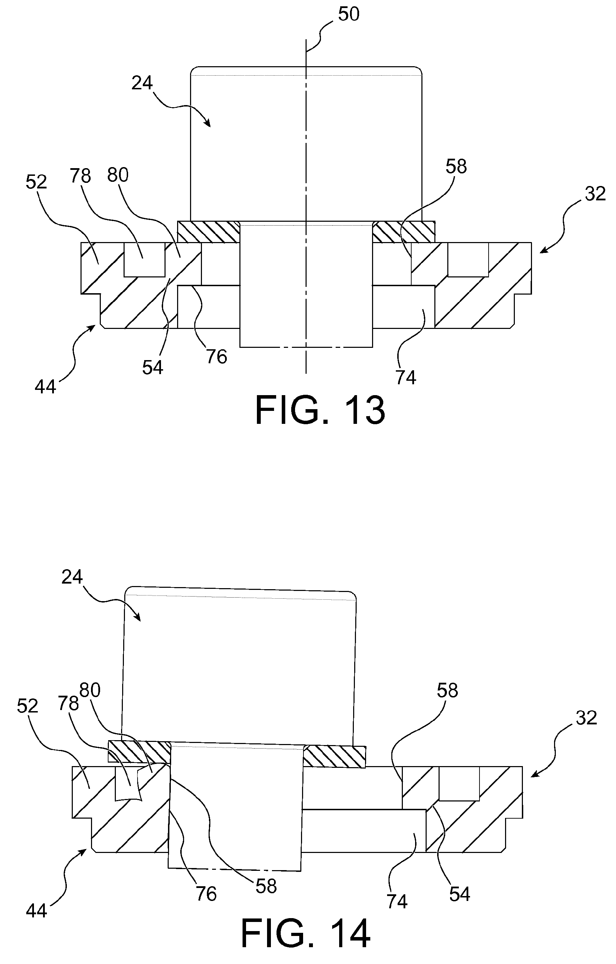

En référence enfin aux figures 13 et 14, il est montré un autre mode de réalisation préféré dans lequel, à partir du mode de réalisation précédent, il est réalisé de plus une gorge 78 débouchant sur la surface supérieure de l'anneau 32 et centrée sur l'axe 50, cette gorge 78 s'étendant radialement vers l'extérieur par rapport à l'évidement 74.

La gorge 78 et l'évidement 74 définissent entre eux le ligament de matière déformable plastiquement 54, reliant une partie 80 faisant saillie radialement vers l'intérieur et définissant partiellement le trou de passage 58, à la partie extérieure 52 de la portion 44.

L'expansion du ligament 54 en cas de chute s'effectue ici dans la gorge 78 et/ou l'évidement 74.

Naturellement, les modes de réalisation montrés sur les figures 11 à 14 peuvent également présenter un ligament déformable sur un secteur angulaire restreint, comme illustré sur la figure 10.

Bien entendu, diverses modifications peuvent être apportées par l'homme du métier à l'invention qui vient d'être décrite, uniquement à titre d'exemples non limitatifs.

## Revendications

1. Emballage (1) pour le transport et/ou l'entreposage de matières radioactives, comprenant un corps d'emballage (8) s'étendant selon une direction longitudinale, et comportant en outre au moins un capot amortisseur de chocs (22) monté sur l'une des deux extrémités longitudinalement opposées du corps d'emballage, ledit capot amortisseur comprenant des portions de fixation (44) sur ledit corps d'emballage, chaque portion de fixation définissant un trou de passage (58) traversé par un élément vissé (24) dans ledit corps d'emballage,
au moins l'une desdites portions de fixation (44) présente une zone déformable (54) qui, en cas de sollicitation extérieure sur le capot amortisseur (22) conduisant à un effort de contact entre ledit élément vissé (24) et le trou de passage (58), est conçue pour se déformer plastiquement.

2. Emballage selon la revendication 1, **caractérisé en ce que** ladite zone déformable (54) s'étend sur un secteur angulaire (70) autour de l'élément vissé (24), au moins une partie de ce secteur angulaire étant orientée vers l'extérieur du capot.

3. Emballage selon la revendication 2, **caractérisé en ce que** ladite zone déformable (54) présente plusieurs éléments (54') espacés angulairement les uns des autres sur ledit secteur angulaire (70).

4. Emballage selon l'une quelconque des revendications précédentes, **caractérisé en ce que** ladite zone déformable (54) s'étend, selon la direction de l'élément vissé (24), sur une épaisseur inférieure à la hauteur dudit trou de passage (58).

5. Emballage selon la revendication 4, **caractérisé en ce que** ladite zone déformable prend la forme d'un ligament de matière (54) situé au droit d'une rainure ou d'une gorge (60).

6. Emballage selon la revendication 5, **caractérisé en ce que** ladite rainure ou gorge (60) s'ouvre sur une même surface que celle sur laquelle débouche ledit trou de passage (58).

7. Emballage selon la revendication 6, **caractérisé en ce que** ledit ligament de matière (54) est annulaire et porte intérieurement une chemise (56) définissant ledit trou de passage (58).

8. Emballage selon la revendication 4, **caractérisé en ce que** ladite zone déformable est une partie (54) en saillie radialement vers l'intérieur en direction de l'élément vissé (24), ladite partie en saillie (54) définissant partiellement ledit trou de passage (58).

9. Emballage selon l'une quelconque des revendications précédentes, **caractérisé en ce que** l'élément vissé (54) présente une tête d'appui (64) de diamètre supérieur à celui du trou de passage (58).

10. Emballage selon l'une quelconque des revendications précédentes, **caractérisé en ce que** ladite portion de fixation (44) fait partie intégrante d'un fond (28) du capot amortisseur (22).

11. Emballage selon l'une quelconque des revendications précédentes, **caractérisé en ce que** ledit corps d'emballage (8) comporte un couvercle (11), un fond (9) écarté du couvercle selon ladite direction longitudinale, ainsi qu'un corps latéral (10) d'emballage reliant le fond et le couvercle.

## Patentansprüche

1. Verpackung (1) für den Transport und/oder die Lagerung von radioaktiven Materialien, umfassend einen Verpackungskörper (8), der sich entlang einer Längsrichtung erstreckt, und ferner umfassend wenigstens eine stoßdämpfende Kappe (22), die an einem der zwei gegenüberliegenden Längsenden des Verpackungskörpers montiert ist, wobei die dämpfende Kappe Bereiche (44) zur Befestigung an dem Verpackungskörper umfasst, wobei jeder Befestigungsbereich ein Durchgangsloch (58) definiert, das von einem Element (24) durchsetzt wird, welches in den Verpackungskörper geschraubt ist, wobei wenigstens einer der Befestigungsbereiche (44) eine verformbare Zone (54) aufweist, die im Fall einer äußeren Krafteinwirkung auf die dämpfende Kappe (22), die zu einer Kontaktkraft zwischen dem geschraubten Element (24) und dem Durchgangsloch (58) führt, dazu ausgelegt ist, sich plastisch zu verformen.

2. Verpackung nach Anspruch 1, **dadurch gekennzeichnet, dass** die verformbare Zone (54) sich über einen Winkelsektor (70) um das geschraubte Element (24) herum erstreckt, wobei wenigstens ein Teil dieses Winkelsektors zur Außenseite der Kappe hin orientiert ist.

3. Verpackung nach Anspruch 2, **dadurch gekennzeichnet, dass** die verformbare Zone (54) mehrere Elemente (54') mit einem Winkelabstand voneinander auf dem Winkelsektor (70) aufweist.

4. Verpackung nach einem der vorhergehenden Ansprüche, **dadurch gekennzeichnet, dass** sich die verformbare Zone (54) in der Richtung des geschraubten Elements (24) über eine Dicke erstreckt, die kleiner ist als die Höhe des Durchgangslochs (58).

5. Verpackung nach Anspruch 4, **dadurch gekennzeichnet, dass** die verformbare Zone die Form eines Materialligaments (54) aufweist, das direkt an einer Rille oder einer Kehle (60) angeordnet ist.

6. Verpackung nach Anspruch 5, **dadurch gekennzeichnet, dass** die Rille oder Kehle (60) sich zur gleichen Oberfläche hin öffnet wie jene, in die das Durchgangsloch (58) mündet.

7. Verpackung nach Anspruch 6, **dadurch gekennzeichnet, dass** das Materialligament (54) ringförmig ist und innen eine Buchse (56) trägt, die das Durchgangsloch (58) definiert.

8. Verpackung nach Anspruch 4, **dadurch gekennzeichnet, dass** die verformbare Zone ein Teil (54) ist, das radial nach innen in Richtung des geschraubten Elements (24) vorsteht, wobei das vorstehende Teil (54) teilweise das Durchgangsloch (58) definiert.

9. Verpackung nach einem der vorhergehenden Ansprüche, **dadurch gekennzeichnet, dass** das geschraubte Element (54) einen Anschlagkopf (64) mit einem Durchmesser aufweist, der größer ist als jener des Durchgangslochs (58).

10. Verpackung nach einem der vorhergehenden Ansprüche, **dadurch gekennzeichnet, dass** der Befestigungsbereich (44) integraler Bestandteil eines Bodens (28) der dämpfenden Kappe (22) ist.

11. Verpackung nach einem der vorhergehenden Ansprüche, **dadurch gekennzeichnet, dass** der Verpackungskörper (8) einen Deckel (11), einen Boden (9), der in der Längsrichtung vom Deckel beabstandet ist, sowie einen seitlichen Verpackungskörper (10) umfasst, der den Boden und den Deckel miteinander verbindet.

## Claims

1. The packaging (1) for transporting and/or storing radioactive materials, comprising a packaging body (8) extending along a longitudinal direction, and further including at least one shock-absorbing cover (22) mounted on one of both longitudinally opposite ends of the packaging body, said absorbing cover comprising attaching portions (44) on said packaging body, each attaching portion defining a clearing hole (58) through which an element (24) screwed in said packaging body passes,
at least one of said attaching portions (44) has a deformable area (54) which, in case of an outer bias on the absorbing cover (22) leading to a contact strain between said screwed element (24) and the clearing hole (58), is designed to plastically deform.

2. The packaging according to claim 1, **characterized in that** said deformable area (54) extends on an angular sector (70) around the screwed element (24), at least part of this angular sector being oriented towards the outside of the cover.

3. The packaging according to claim 2, **characterized in that** said deformable area (54) has several elements (54') angularly spaced from each other on said angular sector (70).

4. The packaging according to any of the preceding claims, **characterized in that** said deformable area (54) extends, along the direction of the screwed element (24), on a thickness smaller than the height of said clearing hole (58).

5. The packaging according to claim 4, **characterized in that** said deformable area assumes the shape of a ligament of material (54) located flush with a slit or a groove (60).

6. The packaging according to claim 5, **characterized in that** said slit or groove (60) opens onto a same surface as the one onto which said clearing hole (58) opens.

7. The packaging according to claim 6, **characterized in that** said ligament of material (54) is annular and internally carries a jacket (56) defining said clearing hole (58).

8. The packaging according to claim 4, **characterized in that** said deformable area is a part (54) protruding radially inward in the direction of the screwed element (24), said protruding part (54) partially defining said clearing hole (58).

9. The packaging according to any of the preceding claims, **characterized in that** said screwed element (54) has a bearing head (64) having a diameter larger than the one of the clearing hole (58).

10. The packaging according to any of the preceding claims, **characterized in that** said attaching portion (44) is integral with a bottom (28) of the absorbing cover (22).

11. The packaging according to any of the preceding claims, **characterized in that** said packaging body (8) includes a lid (11), a bottom (9) remote from the lid along said longitudinal direction, as well as a packaging side body (10) connecting the bottom and the lid.
